# FASCICULE DE BREVET EUROPEEN

(11) **EP 1 778 975 B1**
(45) Date de publication et mention de la délivrance du brevet: **10.02.2010**
(21) Numéro de dépôt: 05797568.2
(22) Date de dépôt: 08.08.2005
(51) Int. Cl.: F03G 7/04

(54) **TOUR AEROGENERATRICE**
WINDENERGIEGENERATORTURM
AIR POWER GENERATOR TOWER

(30) Priorité: 11.08.2004 FR 0408809
(43) Date de publication de la demande: 02.05.2007
(73) Titulaire: Coustou, Alain, 33400 Talence (FR); Alary, Paul, 69120 Vaulx-en-Velin (FR)
(72) Inventeur: Coustou, Alain, 33400 Talence (FR); Alary, Paul, 69120 Vaulx-en-Velin (FR)
(74) Mandataire: Fantin, Laurent
(86) Numéro de dépôt international: PCT/FR2005/050659
(87) Numéro de publication internationale: WO 2006/018587

(56) Documents cités:
- DE-A1- 2 755 959
- GB-A- 2 302 139
- US-A- 4 497 177
- US-A- 4 935 639
- US-A1- 2002 148 222

## Description

La présente invention a pour objet une installation pour produire de l'énergie à bas coûts.

La présente invention vise à proposer une alternative aux solutions existante permettant de produire de manière continue et massive de l'énergie électrique à bas coût, sans pollution, sans émission de gaz à effets de serre, sans consommation de ressources naturelles limitées, sans déchets.

Pour produire de l'énergie électrique, on connaît une installation, décrite dans le document US-2002/148222, comportant un conduit dans lequel descend de l'air alourdi par la pulvérisation de gouttelettes d'eau en entrée du conduit. En sortie du conduit, l'installation comprend des moyens pour convertir l'énergie du flux d'air en énergie électrique. Cette technique utilise la force de pesanteur pour générer un flux d'air, l'air étant préalablement densifié afin d'accroître l'énergie cinétique. Cette solution n'est pas satisfaisante car elle requiert de l'énergie pour pomper l'eau, pour l'acheminer en hauteur et pour la pulvériser ce qui tend à réduire le rendement de l'installation.

Le document US-4.497.177 décrit une installation comportant un conduit accolé à une falaise formant une descente d'air, un bassin d'eau surmonté d'un dôme favorisant le réchauffement de l'eau grâce à l'énergie solaire et un échangeur prévu en partie inférieure du bassin. Ainsi, l'énergie solaire provoque l'évaporation de l'eau et crée un gradient de température entre l'eau chaude en surface et l'eau froide du fond du bassin. L'entrée de l'échangeur débouche au dessus du niveau de l'eau alors que la sortie de l'échangeur est reliée à la descente d'air. L'air humide en traversant l'échangeur se refroidit ce qui provoque sa chute dans la descente. Des moyens disposés à l'intérieur du conduit pour transformer l'énergie du flux d'air en énergie électrique. En complément, le bassin peut être disposé dans une enceinte circulaire de manière à générer grâce à la force de Coriolis un flux d'air tournant au dessus du bassin. Des éoliennes sont alors prévues pour transformer l'énergie de ce flux d'air tournant en énergie électrique. Comme précédemment, cette solution technique consomme de l'énergie pour renouveler l'eau dans le bassin ce qui tend à réduire le rendement de l'installation.

Le document DE-2755959 décrit une installation comprenant un faisceau de conduits d'une hauteur de 2000 m permettant de créer un flux d'air ascendant grâce aux différences de pression entre l'entrée et la sortie des conduits. Des moyens pour transformer l'énergie du flux d'air en énergie électrique sont prévus à l'entrée des conduits. Selon cette technique l'énergie du flux d'air est relativement faible à moins de prévoir des conduits d'une hauteur importante, supérieure à 2 Km, ce qui n'est pas envisageable.

Le document GB 2302139 est considéré comme le document décrivant l'état de la technique antérieure le plus proche et décrit les caractéristiques du préambule

de la revendication 1. Aussi, la présente invention vise à pallier les inconvénients des installations précédentes dont elle diffère considérablement.

A cet effet, l'invention a pour objet une installation en forme de tour creuse destinée à produire de l'électricité au moyen d'un flux d'air ascendant, **caractérisée en ce que** la tour comprend en partie inférieure des entrées d'air avec des parois déflectrices courbes de manière à mettre en rotation l'air et à générer dans la tour un phénomène de trombe entretenu et amplifié par la force de Coriolis, en amont des entrées d'air des moyens pour assurer le réchauffage de l'air aspiré dans la tour par un effet de cheminée, des moyens pour convertir l'énergie cinétique de la colonne d'air en énergie électrique, ladite tour étant évasée à sa base et se rétrécissant progressivement afin d'accélérer l'air par effet Venturi. Ainsi, l'installation utilise quatre forces et effets naturels l'effet cheminée, l'effet de serre, la force de Coriolis et l'effet Venturi, éventuellement en permettant de tirer parti du vent et de la récupération de calories. D'autres caractéristiques et avantages ressortiront de la description qui va suivre de l' invention, description donnée à titre d'exemple uniquement, en regard des dessins annexés sur lesquels:
- la figure 1 est une vue en élévation d'une tour aérogénératrice selon l'invention,
- la figure 2 est une coupe verticale de la tour aérogénératrice,
- la figure 3 est une représentation schématique illustrant les entrées à la base de la tour aérogénératrice,
- la figure 4 est une vue de dessus,
- la figure 5 est une coupe verticale d'une variante d'une tour aérogénératrice,
- la figure 6 est vue en élévation d'une partie d'une tour aérogénératrice montrant l'implantation des ascenseurs extérieurs,
- les figures 7A à 7E sont des coupes illustrant des variantes de la partie supérieure de la tour aérogénératrice,
- les figures 8A à 8C sont des vues en élévation illustrant des variantes de la partie supérieure de la tour aérogénératrice,
- la figure 9 est une vue de dessus un mode de réalisation d'un des bassins susceptibles d'être disposés autour de la tour,
- la figure 10 est une coupe du bassin de la figure 9,
- les figures 11A et 11B sont des schémas illustrant un mode de réalisation de la couverture de la serre entourant la tour, respectivement dans une première position de repos et une seconde position permettant l'évacuation des eaux de pluie.

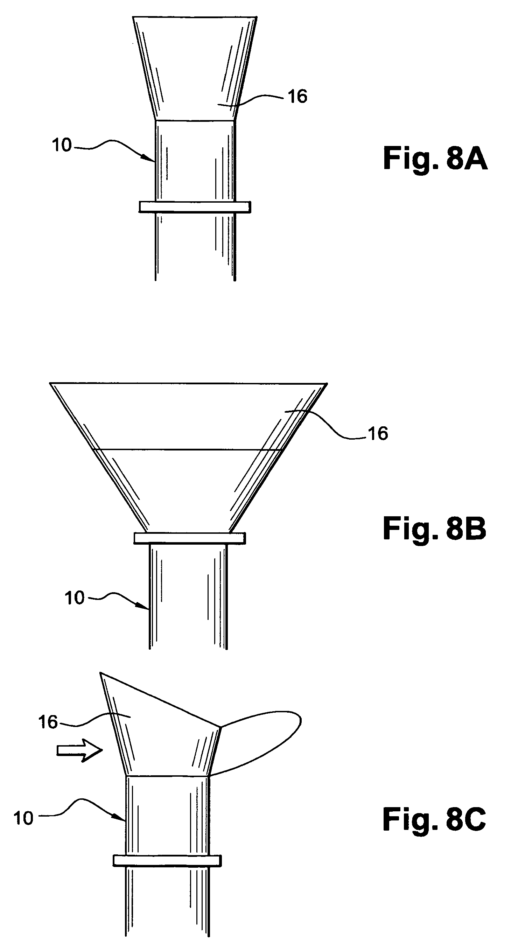

Sur les différentes figures, on a représenté en 10 une tour creuse avec en partie inférieure une pluralité d'entrées 12 délimitées par des cloisons déflectrices 13, avec en partie supérieure une ouverture débouchant 14 munie ou non d'un carénage de sortie 16 (figures 8A à 8C), des moyens 18 pour convertir l'énergie cinétique d'un flux d'air en énergie électrique, par exemple au moins une hélice ou une turbine. En amont des entrées de la tour, l'installation comprend des moyens 20 pour collecter des calories, par exemple sous forme de serres.

A titre d'exemple, la tour a une hauteur minimale de l'ordre d'une centaine de mètres, et de préférence elle a une hauteur de l'ordre de 300 m, non compris le carénage de sortie. Toutefois, on peut appliquer le principe à des tours de taille différente. La tour a un diamètre à la base de l'ordre de 150 à 200 mètres (pour une tour de 300 mètres) et un diamètre intérieur à la base des moyens 18 de conversion (partie cylindrique ou quasi cylindrique) de l'ordre de 25 à 30 mètres (estimation pour une tour de 300 m).

A titre d'exemple, la superficie des moyens 20 de collecte des calories répartis autour de la base de l'édifice est de l'ordre de 1 à 5 Km² pour une tour autonome en fonction de la latitude et des dimensions de la tour. Une superficie de l'ordre de 2 Km² est une estimation raisonnable pour une tour de 200 à 300 mètres dans une zone à très bon ensoleillement.

Le concept reste valable pour des dimensions différentes, dés lors que l'on dépasse la centaine de mètres de hauteur et des tours de plus de 300 mètres sont parfaitement envisageables.

Selon les variantes, la tour est construite en béton et éventuellement en métal ou tout autre matériau résistant et adapté à sa fonction. Il est suggéré d'utiliser un béton technique armé pour la base évasée et les structures porteuses, le même béton ou de l'acier pour la partie cylindrique ou quasi cylindrique et de l'aluminium durci ou un alliage léger de type aéronautique pour le carénage de sortie.

Selon un mode de réalisation, les moyens 20 de collecte de l'énergie comportent des serres surplombant des bassins périphériques de stockage des calories. Ces bassins 24 sont construits en béton ou en matériau synthétique de préférence teinté noir dans la masse, par exemple en PVC ou tout autre plastique suffisamment résistant, avec éventuellement des couvertures flottantes en matériau synthétique teinté noir dans la masse et résistant aux ultra-violets, par exemple en polyéthylène, en PVC cellulaire ou en tout autre matériau adéquat de densité inférieure à celle de l'eau des bassins.

Les vitrages des serres doivent être réalisés dans un matériau transparent résistant aux UV, tel que le verre, le PVC, un polycarbonate, etc.

Selon un mode de réalisation, la base évasée, qui assure une parfaite stabilité à l'ensemble, pourrait occuper un peu plus de trois hectares pour une tour 10 de 300 mètres de haut et est de préférence peinte en noir. Les entrées d'air 12 sont disposées tout autour de la périphérie de cette base et pourraient être grillagées pour interdire la pénétration accidentelle d'oiseaux ou l'aspiration de débris amenés par le vent.

Entre chacune des entrées s'amorce une cloison déflectrice intérieure et/ou extérieure 13. Les cloisons 13 intérieures, qui peuvent être prolongées à l'extérieur sous les verrières, ont simultanément une fonction de structures porteuses et s'interrompent dans la partie centrale de l'édifice.

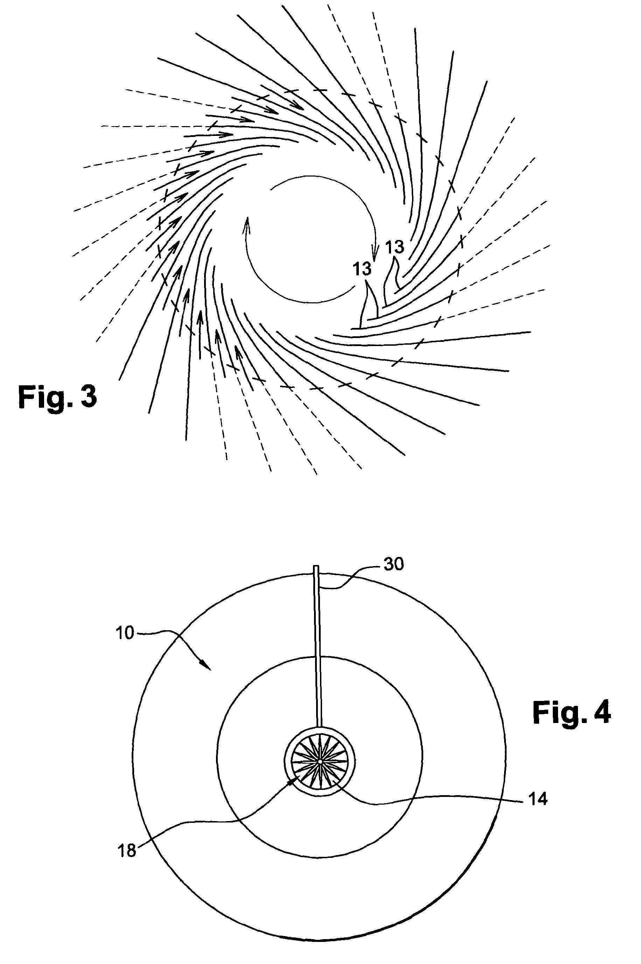

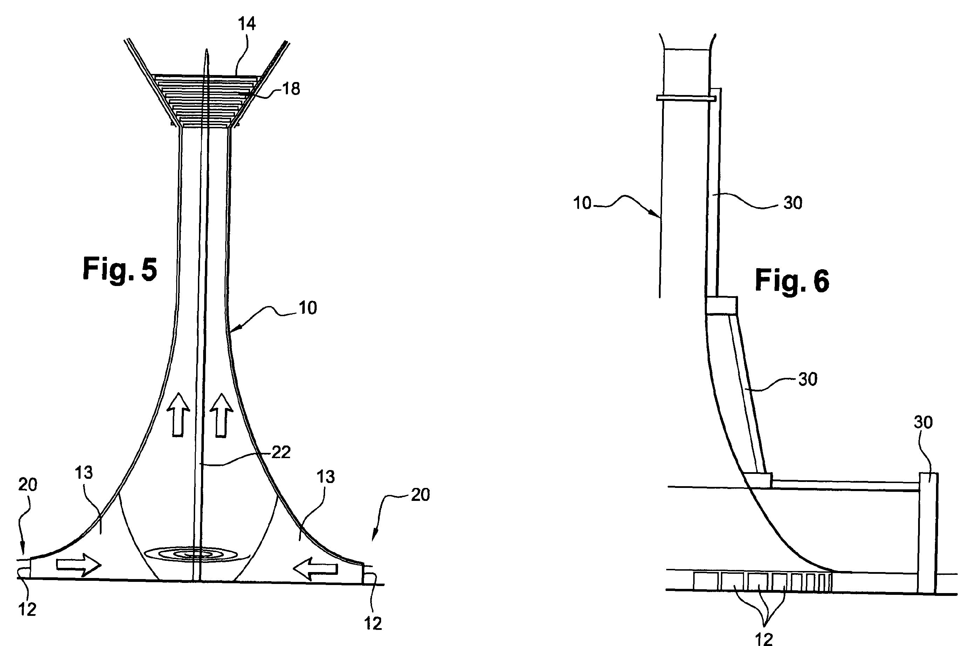

Les cloisons 13 déflectrices intérieures ont une forme (en plan) courbe comme illustré sur la figure 3, afin d'amorcer un mouvement de rotation de l'air aspiré dans la tour 10, rotation qui s'amplifie en un mouvement de spirale de la base vers le sommet et s'auto entretient grâce à la force de Coriolis. Un noyau vertical 22 est placé dans l'axe de la tour et assure la symétrie de la mise en rotation de la colonne d'air. Comme illustré sur la figure 5, le noyau peut s'élever jusqu'à rejoindre l'axe du système de turbines ou d'hélices 18. Si nécessaire, il peut être maintenu dans l'axe de la tour par des câbles tendus. Une variante de ce noyau peut consister en une structure creuse de section ronde et de diamètre variable selon qu'il est ou non décidé d'y faire passer des câbles, un ascenseur et/ou un escalier de secours.

La base de la tour 10 est entourée d'une aire de nature différente, selon que l'édifice est construit ou non dans une région disposant de ressources en eau.

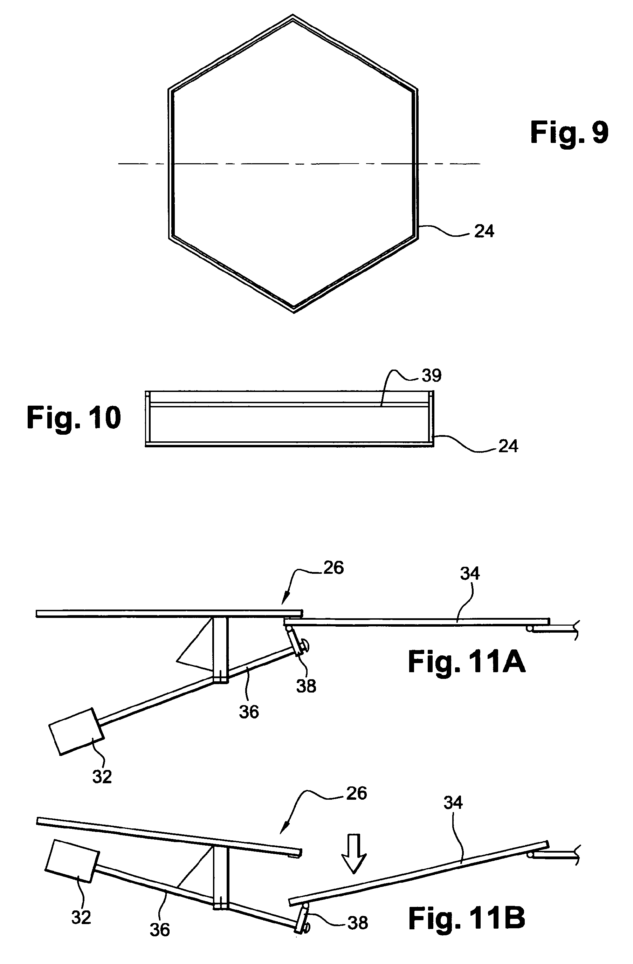

En région disposant de ressources hydrauliques, des bassins 24 communicants de forme hexagonale (figures 9 et 10) ou quadrangulaire jouent le rôle de réservoirs de chaleur relative pour la nuit. Chaque bassin peut être doté d'une couverture 39 flottante de couleur noire, destinée à supprimer l'évaporation.

En zone sèche ou désertique, une surface de sol recouverte de bitume ou de béton peint en noir assure les mêmes fonctions.

Dans les deux cas, la superficie envisagée est de l'ordre de quelques Km² (2 à 3 Km² par exemple en zone très ensoleillée) pour une tour autonome et est surplombée de vitrages 26 très légèrement inclinés du centre vers la périphérie et générant un effet de serre tout en assurant le guidage de l'air réchauffé vers la base de la tour. Cette superficie peut cependant être très sensiblement réduite dans le cas d'association avec une source de calories industrielles (centrales nucléaires, sidérurgie, etc.). La périphérie des serres peut éventuellement faire appel à un matériau de couverture plus léger et plus économique que des châssis vitrés, par exemple un voilage transparent en matériau synthétique.

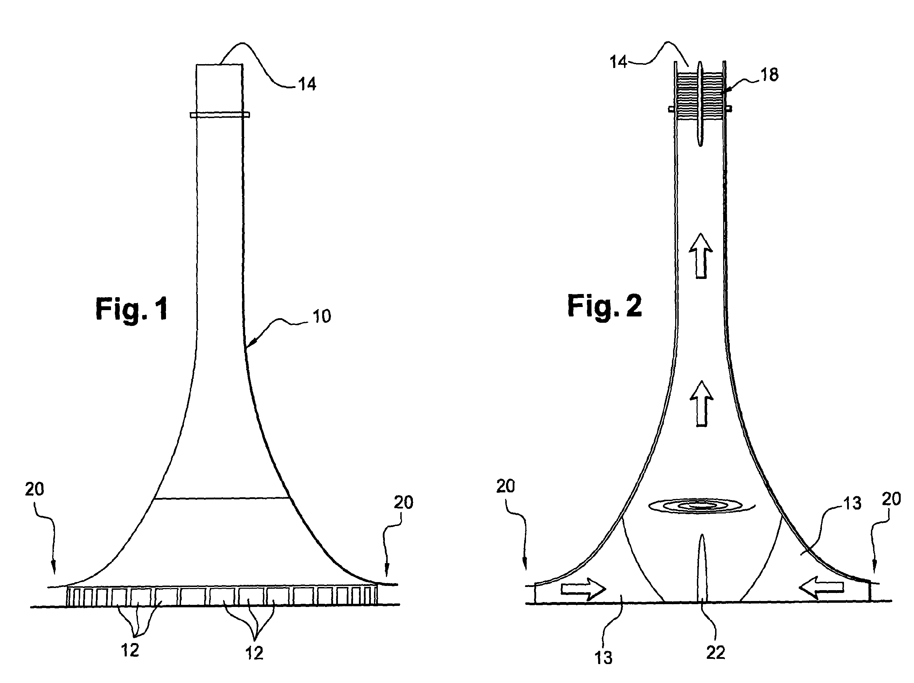

Comme illustré sur les figures 1 et 2, le diamètre de la tour se rétrécit progressivement à partir de la base. Cette particularité doit entraîner une accélération considérable du flux d'air ascendant par combinaison de l'effet cheminée et de l'effet Venturi.

La partie supérieure de la tour jusqu'à la base des turbines ou des hélices est cylindrique ou d'une géométrie proche du cylindre, éventuellement légèrement tronconique, de préférence peinte de couleur claire, en blanc par exemple.

Un dispositif de conversion de l'énergie de la colonne d'air en électricité, pouvant être constitué de plusieurs étages de turbines ou d'hélices 18, contrôlées par des capteurs et gérées par un programme informatique, est installé peu avant le sommet de l'édifice. Ce dispositif peut être accompagné d'un évasement de la tour à son niveau en vue de mieux assurer l'évacuation de la colonne d'air malgré la conversion d'une partie importante de son énergie cinétique. Ce dispositif peut éventuellement être précédé d'un ou plusieurs étages de compresseurs 28 et de vannes 30 de décharges pour évacuer un éventuel excès de pression.

Cette partie cylindrique, quasi cylindrique ou évasée peut être surmontée d'un carénage 16 en sortie de turbines en vue d'optimiser leur rendement et de réduire les éventuelles nuisances sonores.

A l'extérieur, la structure peut comporter un ou plusieurs ascenseurs 30 comme illustré sur la figure 6, un poste de surveillance, de maintenance et/ou de contrôle, des emplacements pour antennes, émetteurs et réémetteurs. L'accès à la base des ascenseurs et de la tour peut être prévu en souterrain pour éviter d'avoir à traverser un espace de serres surchauffées.

En zone de vents réguliers, des éoliennes annulaires, éoliennes à godets à axe vertical ou autres dispositifs éoliens peuvent éventuellement cercler la partie cylindrique ou quasi cylindrique de l'édifice, la tour constituant l'axe de rotation d'au moins un dispositif éolien.

En fonctionnement autonome du système, l'air ambiant autour du pied de la tour, naturellement généralement plus chaud que celui du sommet, est monté en température grâce à l'effet de serre procuré par les surfaces vitrées.

Une réserve de calories est constituée à l'aide de l'échauffement du sol bitumé ou recouvert de béton teint en noir ou, mieux encore, de bassins 24 d'eau hexagonaux (configuration optimale) ou de toute autre forme assurant un pavage régulier du plan.

Dans le choix de bassins hexagonaux, certains pourraient être des demi-bassins pour ménager les espaces nécessaires aux chemins d'entretien et à l'implantation de la structure porteuse des vitrages à effet de serre.

Le diamètre des buses de communication entre bassins intercommunicants dépend du débit d'approvisionnement maximal attendu. En plus des buses prévues en bas des parois, une ouverture d'évacuation de l'éventuel trop plein vers les bassins voisins peut être aménagée en haut de chaque paroi. Ces bassins intercommunicants peuvent être dotés chacun d'une couverture flottante, de préférence rigide ou semi-rigide réalisable en matériau de synthèse (polyéthylène ou autre) de densité inférieure à celle de l'eau des bassins et de préférence teinté dans la masse.

Cette couverture est noire, teinte qui permet l'absorption de la chaleur solaire et évite la prolifération d'algues ou de mousses. Un léger espace est laissé entre les bords de la couverture et les parois du bassin pour permettre la montée ou la descente de la couverture avec le niveau de l'eau. Cette couverture serait utilisée en fonction de la nécessité ou non d'éviter l'évaporation, ce qui dépend des disponibilités en eau, variables selon les zones d'implantation et éventuellement les périodes. Son utilisation limiterait également l'apparition d'un panache de vapeur en haut de la tour. Enfin un système de barres de métal amovibles ou de câbles fixés sur le sommet des parois des bassins peut être prévu pour sécuriser les couvertures flottantes.

La capacité de stockage diurne des calories est très supérieure dans le cas de bassins 26 à ce qu'elle est dans le cas de bitume ou de béton.

Pour compléter le chauffage solaire de l'air, la base évasée de la tour peut être elle-même peinte en noir et isolée par des vitrages sur la partie dont la pente est inférieure à environ 60°.

La zone noire d'absorption et de réserve de calories tout autour de la base de l'édifice (soit une superficie envisagée de l'ordre de 1 à 4 Km² de bassins et/ou de bitume ou de béton) est normalement surplombée par des vitrages 26, éventuellement par des doubles vitrages, en particulier au dessus de la partie la plus chaude de la serre, à proximité de la base de la tour. Une couverture transparente en matériau synthétique plus léger et plus économique peut éventuellement être utilisée en périphérie des serres.

Les vitrages sont en pente légère du centre vers la périphérie des serres et sous eux circule l'air qui est ainsi échauffé avant d'être aspiré par la base de la tour. La pente légère (1 ou 2 % par exemple) favorise la concentration de l'air chaud vers le pied de la tour et surtout l'évacuation des eaux de pluie vers la périphérie. De plus, des dispositifs de basculement partiel de certains châssis vitrés faciliteraient l'évacuation instantanée de l'eau vers les bassins ou le sol en cas de pluie particulièrement abondante qui risquerait sans cela de peser dangereusement sur les vitrages. Ces dispositifs de sécurité fixés sur les châssis des vitrages seraient constitués de systèmes automatiques indéréglables à contrepoids 32, comme illustré sur les figures 11A et 11B, et seraient applicables pour toute serre de grande surface. Ainsi, certains vitrages 34 sont mobiles et peuvent légèrement pivoter de manière à générer un passage pour l'eau lorsqu'ils ont basculé. Afin de les maintenir en position de repos, comme illustré sur la figure 11A, un levier 36 est prévu dont une première extrémité 38 est susceptible de maintenir le vitrage mobile en position repos grâce au contrepoids 32. Lorsque la quantité d'eau dépasse un certain seuil, le poids de l'eau provoque le basculement du vitrage mobile 34 à l'encontre du contrepoids 32 comme illustré sur la figure 11B. De manière automatique, lorsque la quantité de l'eau redevient inférieure au seuil, le contrepoids 32 provoque le basculement du vitrage mobile en position repos comme illustré sur la figure 11A.

Selon les variantes, la zone de vitrages peut être cerclée à plus ou moins grande distance de la base de la tour par un système de volets ou de portes-clapets automatiques ou gérés électroniquement pour optimiser l'utilisation de l'air chauffé en fonction du vent éventuel. Il est ainsi possible d'obtenir une légère surpression susceptible de renforcer l'effet cheminée.

Dans ce cas, les volets ou les portes sont normalement ouverts dans la partie face au vent et fermés dans la partie opposée. L'ouverture de ces volets ou de ces portes-clapets peut être modulée en cas de vent violent pour éviter un excès de surpression.

En cas de nécessité, ils peuvent être partiellement ou complètement fermés pour ralentir ou interrompre le flux d'air aspiré par la tour.

La base de la tour peut elle-même être dotée de volets du même modèle, ce qui permettrait d'arrêter ou de remettre en marche très rapidement l'installation. Pendant l'arrêt, les serres emmagasineraient plus d'énergie, ce qui ferait de la tour une source parfaite de fourniture d'électricité pour les heures de pointe, bien qu'elle soit conçue pour fonctionner en continu.

L'implantation de la tour sur le site d'une centrale nucléaire, bien que non nécessaire car les tours peuvent fonctionner de manière parfaitement autonome, devrait être envisagée chaque fois que possible. Cela permettrait l'utilisation des basses calories de l'eau du circuit extérieur de refroidissement de la centrale. En hiver, cette eau serait déviée vers des bassins relativement proches de la tour, d'où elle gagnerait de proche en proche les bassins extérieurs. En été, le processus pourrait être inversé, l'eau venant des centrales approvisionnant les bassins les plus extérieurs.

Une centrale pourrait ainsi fournir un surcroît d'énergie à une ou plusieurs tours, ce surcroît variant avec le type de centrale et la température des effluents récupérés. Cette solution aurait le double avantage de réduire sensiblement la superficie des serres (donc d'abaisser le coût de l'investissement) et de récupérer les calories rejetées inutilement dans la nature avec un f lux hydraulique souvent important.

Dans ce cas, les couvertures 39 pourraient ne pas être placées sur les bassins.

L'évaporation assurerait alors une évacuation des calories permettant de se passer au moins partiellement des tours de réfrigération de la centrale tout en accroissant l'énergie de la trombe d'air qui gagnerait en humidité. Ce phénomène est bien connu des météorologues dans le cas des tornades naturelles, souvent fortes au-dessus de l'océan et s'affaiblissant ou disparaissant après être arrivées au-dessus de la terre ferme. Dans le cas où l'eau récupérée serait suffisamment chaude (par exemple de l'ordre de 40 à 90 degrés), il pourrait être très rentable de prévoir un système de transfert des calories de l'eau vers l'air plus performant que la simple interface entre surface des bassins et air aspiré.

Trois solutions alternatives pourraient, entre autres, être éventuellement choisies, optimisant la disponibilité d'un volume d'eau chaude parfois très abondant, de l'ordre de plusieurs dizaines de m3/seconde en ce qui concerne les centrales nucléaires dont le refroidissement ne se fait pas en circuit fermé mais utilise l'eau d'un cours d'eau ou de la mer.

Selon une première solution, un réseau de canalisations plus ou moins fines, voire de véritables radiateurs, traversé par l'air aspiré par la base de la tour et dans lequel circulerait l'eau apportant les calories, avant son évacuation dans les bassins ou vers l'extérieur.

Selon une deuxième solution, un système de cascades du sommet des serres vers les bassins. Ces cascades constitueraient des rideaux d'eau en provenance de la centrale et alimentés à partir de canalisations placées sous les vitrages des serres. Une variante de cette solution pourrait consister à créer un ou plusieurs jets d'eau au dessus de chaque bassin ou de la surface de réception et d'évacuation de l'eau.

Selon une troisième solution, dans le cas idéal où l'eau serait disponible sous pression et/ou à une température suffisamment élevée, elle pourrait être directement pulvérisée dans l'air des serres (brumisation), au-dessus des bassins ou de la surface de réception et d'évacuation de l'eau.

Les solutions 2 et 3 auraient de plus l'avantage de charger encore plus efficacement l'air en humidité, pouvant assurer une plus grande énergie de la trombe artificielle captive générée dans la tour.

De plus, la superficie des serres pourrait être encore plus réduite, ce qui permettrait d'envisager l'utilisation de doubles vitrages sans entraîner de surcoûts gênants. Il pourrait même être possible de se passer totalement de l'effet de serre en cas de disposition d'eau suffisamment chaude et de remplacer les vitrages par n'importe quel matériau présentant de bonnes qualités mécaniques, l'espace recouvert étant alors uniquement destiné à guider l'air extérieur vers la base de la tour tout en permettant son réchauffement par les calories extraites de l'eau.

Enfin il pourrait être envisagée de réduire le débit du circuit de refroidissement en pompant moins d'eau dans les cours d'eau, ce qui perturberait moins l'environnement et, en diluant moins les calories issues de la centrale, serait susceptible d'assurer un flux d'eau plus chaude à la tour aérogénératrice. Dans tous les cas cette localisation des tours devrait permettre un abaissement considérable du prix de revient du KW/h qui pourrait s'établir aux environs de 2 centimes/KW/h, voire moins encore dans le cas de la disponibilité d'eau à température suffisamment élevée pour appliquer les solutions 2 et/ou 3 ci-dessus.

D'autres activités telles que la sidérurgie, les cimenteries, les fonderies, les incinérateurs, etc., produisent un débit de calories actuellement souvent perdues. Ces calories pourraient également être récupérées pour accroître significativement la production d'énergie des tours. En effet, même des effluents liquides ou gazeux basses calories peuvent accroître la production d'énergie de la tour par rapport à ce qui est possible en fonctionnement autonome.

Cette production ne dépend en effet pas de la température absolue de l'air à la base, mais de l'écart entre cette température et celle de l'air extérieur au sommet de l'installation, manière élégante de contourner les contraintes du principe de Carnot.

De même, il est possible d'utiliser une source thermale ou la géothermie pour alimenter les bassins avec des avantages comparables au niveau du pré-chauffage de l'eau des bassins. Dans tous les cas, même une source à une température inférieure à celle souhaitée pour l'air à la base de la tour peut être intéressante, dès lors que sa température est supérieure à celle de l'air extérieur.

Dans cette hypothèse, la source peut servir à alimenter les bassins extérieurs, l'eau gagnant de proche en proche les bassins intérieurs. La serre n'a alors qu'à assurer un complément de chauffage, ce qui réduit le nombre de bassins et la surface vitrée nécessaires.

L'air chaud piégé sous la surface vitrée et sous la base évasée de la tour monte dans la structure creuse par effet de cheminée. C'est cet effet qui entraîne la montée de l'air chaud dans une cheminée, montée d'autant plus rapide que la cheminée est haute et que l'écart entre les températures de l'air à la base et au sommet est élevé. Ce phénomène ne suffirait pas à lui seul à assurer une efficacité suffisante du dispositif pour une tour dont la hauteur ne serait que d'une ou plusieurs centaines de mètres, 300 mètres paraissant un bon compromis dans la recherche de l'optimum rendement/coût.

Une tour utilisant seulement l'effet cheminée et l'effet de serre devrait atteindre une hauteur prohibitive d'environ 1000 mètres de haut pour être efficace, posant de sérieux problèmes d'implantation, de construction et de coût. Cela d'autant plus que la superficie des serres alors nécessaire serait au moins double de celle qui est envisagée en cas d'utilisation autonome d'une tour aérogénératrice.

C'est là qu'intervient l'architecture très particulière du dispositif inventé ici, aboutissant à maximiser l'énergie produite en permettant de tirer parti de deux autres effets naturels complémentaires, la force de Coriolis et l'effet Venturi, et de profiter éventuellement d'un effet de surpression dû au vent.

L'air qui pénètre dans la base de la tour est guidé par des cloisons déflectrices courbes internes et/ou externes qui amorcent sa mise en rotation, ce mouvement étant entretenu par l'effet ou la force de Coriolis.

Les cloisons internes, qui prennent naissance entre chaque baie d'entrée de l'air et peuvent éventuellement être prolongées à l'extérieur, peuvent également exercer une fonction de structure porteuse.

Ce dispositif est complété par la présence, dans l'axe de la tour, d'un noyau de quelques dizaines de mètres de hauteur : de l'ordre de 30 mètres, voire plus, pour une tour de 300 mètres. En variante, le noyau peut s'élever jusqu'aux moyens 18 de conversion.

Ce noyau axial est destiné à assurer une symétrie satisfaisante de la rotation de l'air en dépit des éventuelles variations au niveau de son aspiration dans la tour.

Ainsi est initié un phénomène de trombe, entretenu et amplifié par l'effet Coriolis. Nous obtenons de cette manière une tornade captive et auto-entretenue. L'air chaud ne se contente plus de monter mais se trouve animé d'un rapide mouvement de rotation dans le même sens que celui prévu pour les étages de turbines.

L'effet VENTURI est généré par l'architecture particulière de la tour, évasée à la base, son diamètre intérieur se rétrécissant au fur et mesure que l'air monte par effet cheminée. Cette caractéristique entraîne une accélération considérable du flux d'air ascendant et en rotation, par effet Venturi.

Avec un diamètre intérieur dans la partie haute de la tour égal - par exemple - au 1/7^{ème} de celui de la base, et un écart de température d'une trentaine de degrés, la vitesse de la colonne d'air peut atteindre plusieurs centaines de Km/h. Ainsi l'énergie véhiculée par la colonne d'air est considérablement amplifiée par rapport à ce qui serait obtenu par simple effet de cheminée dans une structure tubulaire et de diamètre constant de la base au sommet. Il est seulement préférable d'éviter que cette vitesse dépasse 0,7 fois la vitesse du son.

L'énergie de la trombe d'air captive et auto-entretenue est recueillie dans la partie haute de la tour par des moyens 18 de conversion qui pourraient consister en un train de turbines ou d'hélices multipales à pas variable, d'un diamètre légèrement inférieur au diamètre intérieur de la tour.

L'envergure de ces turbines ou hélices pourrait être de l'ordre de 25 mètres pour un diamètre intérieur de 30 mètres, ou tout autre dispositif de récupération. L'espace laissé libre entre les pales et la paroi intérieure (cylindrique, quasi-cylindrique ou légèrement tronconique) permettrait à la fois d'éviter l'étouffement du cyclone artificiel et d'éviter un effet de bouchon qui pourrait être provoqué par le ralentissement de l'air du au prélèvement de l'énergie par le train de turbines. L'air périphérique serait accéléré par la pression de l'air ascendant et, après avoir dépassé le train de turbines ou d'hélices, générerait un effet supplémentaire d'aspiration susceptible d'améliorer le rendement de l'ensemble. De plus, en réduisant légèrement la surface de la section interne de la tour à ce niveau, le noyau central du train de turbines ou d'hélices (dans l'axe de « l'oeil » du cyclone artificiel) peut générer un renforcement de l'effet Venturi peu avant le contact de la colonne d'air avec le train de turbines ou d'hélices, et cela sans freiner la rotation de la colonne.

Une variante illustrée sur la figure 5 consiste en l'évasement de la partie la plus haute de la tour au droit du train de turbines ou d'hélices 18 dont le diamètre augmente de la plus basse à la plus haute. L'augmentation du diamètre assure alors l'évacuation d'un volume d'air constant en dépit du freinage de la colonne d'air par les turbines et accroîtrait le rendement de l'ensemble.

Une autre variante, pouvant être combinée avec l'une des précédentes, consiste à précéder le train de turbines ou d'hélices d'un ou plusieurs étages de compresseur, entraînés ou alimentés en énergie par les turbines ou hélices, et de vannes de décharges 30. Ces dispositifs sont gérés grâce à des capteurs (enregistrant vitesses du flux d'air et de la rotation des turbines ou des hélices) et à un programme informatique.

Enfin, la sortie haute de la tour peut être utilement surmontée d'un carénage 16 destiné à la fois à empêcher l'apparition de turbulences en sortie du train de turbines ou d'hélices et à minimiser les éventuelles nuisances sonores. La géométrie de ce carénage peut être tronconique ou évolutive.

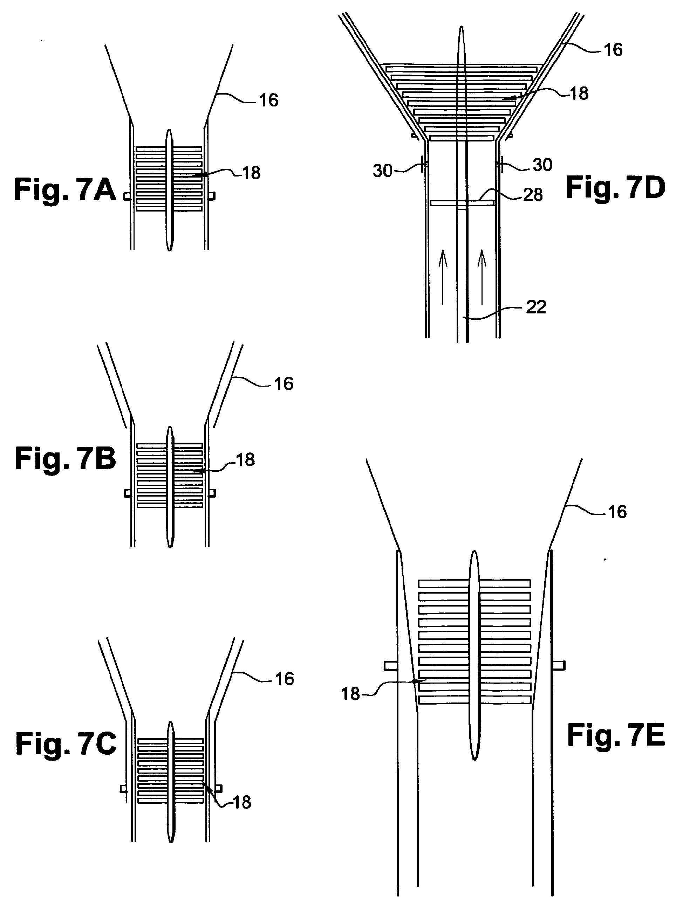

Selon les variantes, on peut envisager un carénage symétrique simple tel que le carénage tronconique présenté sur les figures 7A, 7E, 8A et 8B, un carénage double, destiné à provoquer un phénomène d'aspiration d'air frais pour gainer et refroidir la périphérie de la colonne d'air chaud après sa sortie du train de turbine ou d'hélices, cette seconde solution étant susceptible de réduire encore plus efficacement les nuisances sonores, comme illustré sur la figure 7B, ou un carénage double prolongé vers le bas pour gainer la partie de la tour contenant les turbines ou les hélices comme illustré sur les figures 7C et 7D. Ce carénage enveloppant aspirerait une couche d'air frais le long de cette partie, ce qui, associé éventuellement à des radiateurs extérieurs, pourrait aider à assurer le refroidissement des turbines (ou de tout autre système de captage de l'énergie), tout en remplissant les mêmes fonctions que la solution précédente.

Cette troisième formule devrait donc être particulièrement intéressante.

Par ailleurs, il est envisageable de choisir un carénage asymétrique et partiellement ou totalement mobile. Ainsi, par exemple, un carénage en biseau doté d'un dispositif de type girouette lui permettant d'orienter automatiquement la partie haute du biseau face au vent de manière à amplifier l'effet d'aspiration de la colonne d'air, comme illustré sur la figure 8C.

Il est raisonnable de prévoir qu'environ 50% de l'énergie cinétique de la colonne d'air soit convertie en électricité dans la version de la tour 10 illustrée sur les figures 1 et 2. L'autre moitié sera alors destinée à l'auto-entretien du phénomène de trombe. Le pourcentage de conversion de l'énergie cinétique pourrait sensiblement dépasser 75% dans la version plus élaborée de la tour illustrée sur la figure 5.

La production d'électricité ainsi obtenue est véritablement permanente. En particulier, elle est pratiquement indépendante du vent, contrairement aux éoliennes classiques. Les éventuelles fluctuations de production ne peuvent guère provenir que des variations de l'écart entre les températures de l'air à la base et au sommet de la tour. Le vent peut néanmoins contribuer à amplifier l'effet cheminée par un double effet de surpression à la base de la tour et d'aspiration au sommet.

La puissance installée pourrait être de plusieurs centaines de mégawatts pour chaque tour, de l'ordre de 500 MW en fonctionnement optimal avec une trentaine de degrés d'écart entre l'air de la base et celui du sommet, pour une tour de 300 mètres de haut. La puissance pourrait être encore bien plus élevée dans le cas d'une implantation près d'une centrale nucléaire ou d'une activité industrielle grosse génératrice de calories. Les effluents de celle-ci assureraient l'alimentation des bassins en eau préchauffée et donc un écart de températures à la fois plus stable et plus élevé pour une même superficie de serres. Ils pourraient aussi être directement mis en contact avec l'air de la zone de serres par divers procédés (pulvérisation, cascades, jets d'eau, etc.). Dans cette hypothèse on peut espérer atteindre et même dépasser une puissance de l'ordre de 700MW, voire plus encore dans la version de la tour illustrée sur la figure 5, atteignant l'ordre de grandeur de la puissance d'une tranche nucléaire pour un coût particulièrement faible.

Certaines installations industrielles ont parfois simultanément de gros besoins en énergie électrique et une nécessité d'eau de refroidissement. L'implantation d'une tour aérogénératrice peut dans ce cas à la fois générer l'énergie nécessaire à l'installation et réduire les rejets thermiques dans l'environnement.

En conclusion, la production en masse d'énergie électrique à un coût particulièrement faible (de l'ordre de 2 centimes par KW/h en première estimation) par les véritables centrales électriques aérothermiques que sont les tours aérogénératrices constituerait un avantage économique extrêmement intéressant.

Elles présenteraient aussi l'avantage de permettre de récupérer les calories perdues aussi bien par les centrales électriques que par d'autres installations industrielles et de diminuer les nuisances thermiques desdites installations tout en les alimentant en énergie.

Elles peuvent produire de l'électricité avec un excellent rendement à partir de sources à basse température, puisqu'une température supérieure d'une trentaine de degrés à la température ambiante leur suffit déjà pour obtenir des performances très intéressantes.

Les dangers environnementaux sont nuls :
La trombe artificielle ne peut absolument pas s'échapper de la tour parce qu'elle n'est auto-entretenue que grâce à la structure particulière de l'installation et que la majeure partie de son énergie est convertie en électricité. De plus, la tour utilise les calories disponibles, fournies par le soleil, la géothermie ou une installation industrielle, sans en produire elle-même et sans générer de déchets ou de gaz à effet de serre.

La gamme de puissances est assez étendue entre la tour de 100 m et celle de plus de 300 m pour assurer une grande variété d'utilisations, la puissance d'une tour de 300m avec préchauffage par récupération de calories pouvant aller jusqu'à plusieurs centaines de MW, voire approcher la puissance d'une tranche nucléaire, tout en améliorant son rendement global et en la rendant économiquement et écologiquement plus intéressante.

## Revendications

1. Installation en forme de tour (10) creuse destinée à produire de l'électricité au moyen d'un flux d'air ascendant, ladite tour creuse comprenant en partie inférieure des entrées d'air (12), des moyens (20) pour assurer le réchauffage de l'air aspiré dans la tour (10) et obtenir un effet de cheminée, des moyens (18) pour convertir l'énergie cinétique de la colonne d'air en énergie électrique, ladite tour (10) creuse ayant une forme évasée à sa base et se rétrécissant progressivement jusqu'à une ouverture débouchante (14) en partie supérieure afin d'accélérer l'air par effet Venturi, **caractérisée en ce que** la tour comprend en partie inférieure au niveau des entrées d'air (12) des cloisons déflectrices (13) avec une section courbe dans un plan horizontal et **en ce que** les moyens (18) pour convertir l'énergie cinétique de la colonne d'air en énergie électrique sont disposés à proximité de l'ouverture débouchante (14), la tour ayant une hauteur minimale de l'ordre de 100 m.

2. Installation selon la revendication 1, **caractérisée en ce que** les moyens (20) pour le réchauffage de l'air comprennent des bassins (24) d'eau recouverts par des serres (16) entourant la périphérie de la tour.

3. Installation selon la revendication 2, **caractérisée en ce que** certaines parties de serres (34) sont mobiles afin de basculer lorsque la quantité d'eau présente au-dessus desdites parties dépasse un certain seuil.

4. Installation selon la revendication 2 ou 3, **caractérisée en ce que** les bassins de stockage de calories sont alimentés en eau tiède ou chaude issue de centrales nucléaires ou de toute autre installation industrielle susceptible de fournir des calories additionnelles, par la récupération des effluents de refroidissement.

5. Installation selon la revendication 4, **caractérisée en ce qu'**elle comprend des dispositifs de transmission des calories de l'eau, issue d'une centrale nucléaire ou de toute autre installation industrielle, à l'air aspiré par la tour, grâce à l'utilisation de réseaux de canalisations, de radiateurs, de cascades, de jets d'eau et/ou de pulvérisation de l'eau chaude.

6. Installation selon l'une quelconque des revendications précédentes, **caractérisée en ce que** la tour comprend en partie haute des turbines ou des hélices à pas variable, éventuellement précédées d'un ou plusieurs étages de compresseurs ou de tout autre dispositif à même de récupérer l'énergie du flux d'air ascendant sans en provoquer l'étouffement.

7. Installation selon l'une quelconque des revendications précédentes, **caractérisée en ce que** les cloisons déflectrices (13) constituent une structure porteuse sur lesquelles repose la tour.

8. Installation selon l'une quelconque des revendications précédentes, **caractérisée en ce que** la tour comprend un carénage divergent au niveau de l'extrémité supérieure de la tour.

9. Installation selon l'une quelconque des revendications précédentes, **caractérisée en ce que** la partie supérieure de la tour comprend un carénage de manière à former une enveloppe d'air à l'extérieur de ladite tour.

10. Installation selon l'une quelconque des revendications précédentes, **caractérisée en ce qu'**elle comprend des volets et/ou des portes clapets en périphérie de la tour et des moyens (20) pour assurer le réchauffage de l'air afin de contrôler le flux d'air entrant et pour optimiser l'utilisation de l'air chauffé en fonction du vent par l'obtention d'une surpression contrôlée.

11. Installation selon l'une quelconque des revendications précédentes, **caractérisée en ce qu'**elle comprend au moins un dispositif éolien dont l'axe de rotation est la partie haute et cylindrique ou quasi cylindrique de la tour.

## Claims

1. Hollow tower-shaped plant (10) intended to produce electricity by means of a rising airflow, said hollow tower-shaped including, in the lower portion, air inlets (12), means (20) for heating the air suctioned in the tower (10) and for obtaining a chimney effect, means (18) for converting the kinetic energy of the air column into electrical energy, said hollow tower-shaped (10) being flared at its base and gradually shrinking to the through-opening (14) so as to accelerate the air by the Venturi effect, **characterised in that** the tower includes, in the lower portion, at the air inlets (12), baffle plates (13) curved in an horizontal plane and **in that** said means (18) for converting the kinetic energy of the air column into electrical energy are arranged near the through-opening (14), the tower having a minimum height on the order of one hundred metres.

2. Plant according to claim 1, **characterised in that** the means (20) for heating the air include water basins (24) covered by greenhouses (16) surrounding the periphery of the tower.

3. Plant according to claim 2, **characterised in that** some greenhouse portions (34) are mobile so as to tilt when the amount of water on top of said portions exceeds a certain threshold.

4. Plant according to claim 2 or 3, **characterised in that** the basins for storing heat energy are supplied with warm or hot water coming from nuclear power plants or any other industrial plant capable of providing additional heat energy, by the recovery of cooling effluents.

5. Plant according to claim 4, **characterised in that** it includes devices for transmitting heat energy from the water, coming from a nuclear power plant or any other industrial plant, to the air suctioned by the tower, by using networks of pipelines, radiators, cascades, water jets and/or spraying of hot water.

6. Plant according to any one of the previous claims, **characterised in that** the tower includes, in the upper portion, turbines or propellers with a variable pitch, optionally preceded by one or more compressor stages or any other device capable of recovering the energy of the rising airflow without causing smothering.

7. Plant according to any one of the previous claims, **characterised in that** the baffle plates (13) constitute a structural frame on which the tower is supported.

8. Plant according to any one of the previous claims, **characterised in that** the tower includes a divergent shroud at the upper end of the tower.

9. Plant according to any one of the previous claims, **characterised in that** the upper portion of the tower includes a shroud so as to form an air envelope outside said tower.

10. Plant according to any one of the previous claims, **characterised in that** it includes shutters and/or valves at the periphery of the tower and means (20) for reheating the air so as to control the incoming airflow and to optimise the use of the heated air according to the wind, by obtaining a controlled overpressure.

11. Plant according to any one of the previous claims, **characterised in that** it includes at least one wind turbine device of which the axis of rotation is the upper and cylindrical or quasi-cylindrical portion of the tower.

## Patentansprüche

1. Anlage in Form eines hohlen Turms (10), welche dazu bestimmt ist, mittels eines aufsteigenden Luftstroms Strom zu erzeugen, wobei der hohle Turm folgendes umfasst, nämlich im unteren Teil Lufteinlässe (12), Mittel (20), um das Erwärmen der in den Turm (10) angesaugten Luft sicherzustellen und um einen Kamineffekt zu erzielen, Mittel (18), um die kinetische Energie der Luftsäule in elektrische Energie umzuwandeln, wobei der hohle Turm (10) an seinem Fuß eine erweiterte Form aufweist und sich bis zu einer ausmündenden Öffnung (14) im oberen Teil zunehmend verjüngt, um die Luft durch Venturi-Effekt zu beschleunigen, **dadurch gekennzeichnet, dass** der Turm im unteren Teil im Bereich der Lufteinlässe (12) Ablenkwände (13) mit einem in einer horizontalen Ebene gekrümmten Querschnitt umfasst und dass die Mittel (18) zur Umwandlung der kinetischen Energie der Luftsäule in elektrische Energie in der Nähe der ausmündenden Öffnung (14) angeordnet sind, wobei der Turm eine Mindesthöhe in der Größenordnung von 100 m aufweist.

2. Anlage nach Anspruch 1, **dadurch gekennzeichnet, dass** die Mittel (20) zum Erwärmen der Luft Wasserbecken (24) umfassen, die mit den Umfang des Turms umgebenden Treibhäusern (16) bedeckt sind.

3. Anlage nach Anspruch 2, **dadurch gekennzeichnet, dass** einige Teile (34) der Treibhäuser beweglich sind, um zu verschwenken, wenn die oberhalb der genannten Teile vorhandene Wassermenge eine gewisse Schwelle überschreitet.

4. Anlage nach Anspruch 2 oder 3, **dadurch gekennzeichnet, dass** die Wärmespeicherbecken mit lauwarmem oder heißem Wasser aus Kernkraftwerken oder jedweder anderen Industrieanlage gespeist werden, die geeignet ist, zusätzliche Wärme durch das Auffangen des Kühlabwassers zu liefern.

5. Anlage nach Anspruch 4, **dadurch gekennzeichnet, dass** sie Vorrichtungen zum Übertragen der Wärme des aus einem Kernkraftwerk oder jeder anderen Industrieanlage stammenden Wassers auf die durch den Turm angesaugte Luft, durch Verwendung von Rohrleitungsnetzen, Radiatoren, Kaskaden, Wasserstrahlen und/oder Warmwasserzerstäubung umfasst.

6. Anlage nach einem der vorhergehenden Ansprüche, **dadurch gekennzeichnet, dass** der Turm im oberen Teil Turbinen oder Schrauben mit variabler Steigung aufweist, denen eventuell eine oder mehrere Stufen von Verdichtern oder jeder anderen Vorrichtung, welche geeignet ist, die Energie des aufsteigenden Luftstroms zu gewinnen, ohne dessen Ersticken zu bewirken, vorgeschaltet ist bzw. sind.

7. Anlage nach einem der vorhergehenden Ansprüche, **dadurch gekennzeichnet, dass** die Ablenkwände (13) eine Tragstruktur bilden, auf welcher der Turm ruht.

8. Anlage nach einem der vorhergehenden Ansprüche, **dadurch gekennzeichnet, dass** der Turm im Bereich seines oberen Endes eine divergente Verkleidung aufweist.

9. Anlage nach einem der vorhergehenden Ansprüche, **dadurch gekennzeichnet, dass** der obere Teil des Turms eine Verkleidung aufweist, derart, dass eine Lufthülle außerhalb des Turms gebildet wird.

10. Anlage nach einem der vorhergehenden Ansprüche, **dadurch gekennzeichnet, dass** sie Klappen und/oder Klappentüren am Umfang des Turms sowie Mittel (20) zur Sicherstellung des Erwärmens der Luft umfasst, um den eintretenden Luftstrom zu steuern und um die Verwendung der erwärmten Luft in Abhängigkeit des Windes durch Erzielen eines kontrollierten Überdrucks zu optimieren.

11. Anlage nach einem der vorhergehenden Ansprüche, **dadurch gekennzeichnet, dass** sie wenigstens eine Windkrafteinrichtung umfasst, deren Rotationsachse der obere und zylindrische oder quasi-zylindrische Teil des Turms ist.
